# EUROPEAN PATENT APPLICATION

(11) **EP 3 734 537 A1**
(43) Date of publication of application: **04.11.2020**
(21) Application number: 20382354.7
(22) Date of filing: 30.04.2020
(51) Int. Cl.: G06Q 30/06, G06Q 50/12, G06Q 10/08

(54) **RESTAURANT SERVICE CONTROL SYSTEM**

(30) Priority: 02.05.2019 ES 201930699 U
(71) Applicant: Perarnau Pradell, Eduard, 08320 El Masnou (Barcelona) (ES)
(72) Inventor: Perarnau Pradell, Eduard, 08320 El Masnou (Barcelona) (ES)
(74) Representative: Maslanka Kubik, Dorota Irena

(57) **Abstract**

Restaurant service control system; comprising: a POS (1), wireless handheld POS devices (14); a printer (15) for orders (16); identification devices (2) attached to containers (R) for serving the orders, - a first reading terminal (3) of the identification device (2) of the containers (R) connected to the POS (1) and provided with means for allocating each container (R) to a certain dish of an order (16); - detection (4) and/or tracking (5) means of the identification device (2) of each container (R) inside the restaurant; and a suitable computer application to track the identification devices (2) of the containers (R) in use and register the time from the allocation of a container (R) to an order (16) until it leaves the KITCHEN or is delivered at the corresponding table (M).

## Description

### Technical field

This invention is applicable in restaurants and more specifically in equipment intended to facilitate order management and service control.

### State of the art

Currently, POS or Point of Sale Terminals are widely used, which basically comprise a CPU with a screen and a cash drawer, wireless handheld POS devices with which the waiters take the orders for each of the tables, and at least one printer for the orders to be prepared and served.

These systems considerably facilitate the work of waiters and kitchen staff in charge of preparing the dishes to be served.

However, in some cases, there are unjustified delays from the time the order is placed until the food is served to the customer, which can negatively affect the establishment's rating by the customers and accordingly a reduction in business volume.

This problem is perceived by the customer, but it is likely that the management is not aware of the existence of such delay and is unable to control the productivity of the staff in charge of preparing the food or plating it up.

The applicant of the present invention is unaware of the existence on the market of systems that allow knowing the time used in the plating up process and the productivity of kitchen employees.

Thus, the technical problem addressed is a service control system in restaurants that allows solving the problems outlined above.

### Explanation of the invention

The restaurant service control system which is the subject matter of this invention is applicable in those restaurants that have a POS (Point of Sale) terminal with CPU, wireless handheld POS devices, and printer for the orders for their preparation in the kitchen and subsequent serving at the corresponding tables.

This system presents characteristics aimed at providing information on the control of the plating up process and the service, and the productivity of restaurant staff.

For this, and according to the invention, this system comprises:
- identification devices attached to the containers used for serving the orders, such as: plates, trays, dishes, glasses or the like;
- a first reading terminal of the identification device of the containers to be used in the service of the successive orders, said first terminal being connected to the POS and provided with means for allocating each container to the service of a certain dish of the order;
- detection and/or tracking means of the identification device of each container inside the restaurant, from its allocation to the service of a certain dish of an order until it leaves the kitchen or until it is delivered at the corresponding table and;
- a computer application installed in the POS and suitable for detecting and/or tracking the identification devices of the containers in use, and registering the time elapsed from the allocation of a container, carrying the corresponding identification device, to the service of a dish of an order (16), until it leaves the kitchen or is delivered at the corresponding table.

With this system, when the kitchen receives an order, the person or people in charge of preparing the dishes of said order take the appropriate containers (plates, trays, dishes, etc.) to serve them and pass them through the first reading terminal, to read the identification device attached to said containers, and allocate each container to a dish of a certain order.

At that moment, the POS registers when the container in question comes into service and begins to count its time of use which elapses until the container with the food is detected by the detection and/or tracking means of the identification device corresponding to said container, either when leaving the kitchen or when it is delivered at the corresponding table.

In this way the system allows determining the time elapsed since receiving the order in the kitchen until it is served; i.e., the time spent preparing or plating up each of the dishes and serving it to the corresponding customer; and accordingly determining the productivity of kitchen staff.

According to the invention, the identification devices are permanently attached to the service containers, for example encapsulated and adhered to the containers, or removably attached; having provided in any case that said identification devices are not damaged by water or temperature during their normal use, or during the washing of said containers,

In one embodiment of the invention the identification devices attached to the containers are composed of RFID chips.

The first reading terminal of the identification device of the containers is composed of an RFID reader provided with an antenna, connected to the POS and arranged in the kitchen or in a plating up area for the dishes of the orders.

The detection and/or tracking means of the identification devices comprise RFID readers distributed around the restaurant and connected to the POS.

In one embodiment of the invention, the RFID chips, which make up the identification devices attached to the containers, incorporate a GPS device so that the computer application installed in the POS can track the route of the containers in use from when they leave the kitchen until they are delivered at the corresponding table; and so that said application registers both the route followed by the containers, as well as the time for preparation and plating up and for delivery to the corresponding customer.

### Brief description of the content of the drawings.

To complete the description being made and to aid a better understanding of the characteristics of the invention, the present specification is accompanied by a set of drawings where, for purpose of illustration only and in a non-limiting sense, the following is represented:

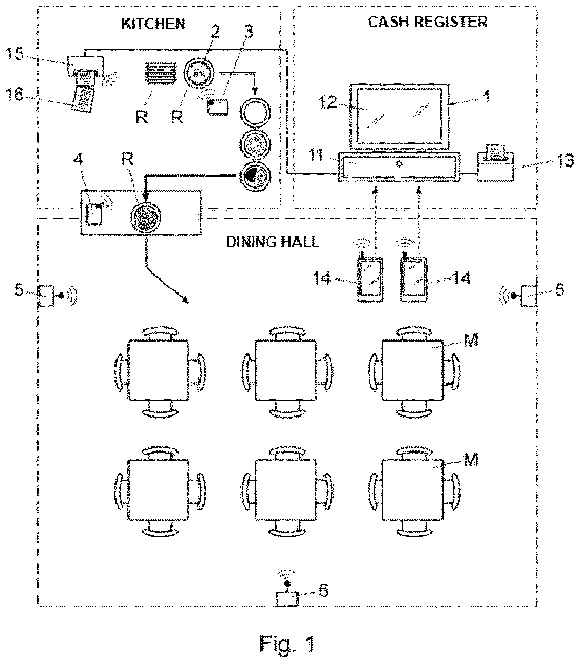

- Figure 1 shows an example of embodiment of the service control system according to the invention applied in a restaurant.

### Detailed explanation of a preferred embodiment of the invention.

The restaurant service control system represented in Figure 1 comprises a POS (1) with CPU located in a CASH REGISTER area, provided with a cash drawer (11), a screen (12) and a receipt printer (13).

This POS (1) is additionally provided with wireless handheld POS devices (14) portable by the DINING HALL waiters for taking orders at the restaurant tables (M) and a printer (15) for the orders (16) located in the KITCHEN or in the plating up area of the dishes of each order (16).

According to the invention, the system comprises identification devices (2) composed in this case of RFID chips permanently or temporarily attached to the containers (R), such as plates, trays, dishes, glasses or the like, to be used in the KITCHEN to serve the dishes of each order (16). Said identification devices (2) allow the system to carry out the identification and individualised tracking of each container (R) by the restaurant.

The system comprises in the plating up area of the KITCHEN a first reading terminal (3) of the identification device (R) of the containers to be used in the service of the successive orders, said first terminal being connected to the POS (1) and provided with means for allocating each container (R) to the service of a certain dish of the order.

This first reading terminal (3) performs the reading of the identification device (2) of each container (R) to be used in the food service and assigns said specific container (R) to a certain dish of a specific order (16).

At that precise moment, the system registers, by means of a specific application installed in the POS (1), the time when each container (R) comes into use, i.e., the moment when a container (R) is taken to serve a specific dish.

The system is additionally provided with detection means (4) and tracking means (5) of the identification device (2) of each container (R) inside the restaurant, from its allocation to the service a certain dish of an order until it leaves the KITCHEN or until it is delivered at the corresponding table (M).

In this embodiment, the detection means (4) are composed of an RFID reader arranged in a KITCHEN dispatching area of the containers (R) with the plated up food and; the tracking means (5) of the identification device (2) of each container (R), are composed in this case of RFID readers whose antennas are distributed throughout the DINING HALL.

With the elements described, the computer application installed in the POS performs a detection and/or tracking of the identification devices (2) of the containers (R) in use, allocated to each dish, and calculates the time elapsed since allocating a container (R) to the service of a dish of an order until it leaves the kitchen or is delivered at the corresponding table (M); allowing to know based on reliable data, the time for plating up and serving the customer, and accordingly the productivity of kitchen staff.

Having described the nature of the invention sufficiently, as well as an example of a preferred embodiment, it should be stated for all applicable purposes that the materials, shape, size and arrangement of the described elements can be modified, provided this does not imply an alteration of the essential characteristics of the invention as claimed below.

## Claims

1. Restaurant service control system; comprising: a POS (1) or Point of Sale Terminal, with CPU, wireless handheld POS devices (14) for entering the orders from the tables (M), and a printer (15) for orders (16) located in a KITCHEN or plating up area; **characterised in that** it comprises:
- identification devices (2) attached to containers (R) for serving the orders, such as plates, trays, dishes, glasses or the like;
- a first reading terminal (3) of the identification device (2) of the containers (R) to be used in the service of the successive orders (16), said first terminal (3) being connected to the POS (1) and provided with means for allocating each container (R) to the service of a certain dish of the order (16);
- detection (4) and/or tracking (5) means of the identification device (2) of each container (R) inside the restaurant from its allocation to the service of a certain dish of an order (16) until it leaves the KITCHEN or until it is delivered at the corresponding table (M) and;
- a computer application installed in the POS (1) and suitable for detecting and/or tracking the identification devices (2) of the containers (R) in use, and registering the time elapsed from the allocation of a container (R), carrying the corresponding identification device (2), to the service of a dish of an order (16) until it leaves the KITCHEN or is delivered at the corresponding table (M).

2. System according to the preceding claim, **characterised in that** the identification devices (2) are permanently or removably attached to the service containers (R).

3. System according to any one of the preceding claims, **characterised in that** the identification devices (2) attached to the containers (R) are composed of RFID chips.

4. System according to claim 3, **characterised in that** the first reading terminal (3) of the identification device (2) of the containers (R) is composed of an RFID reader provided with an antenna, connected to the POS (1) and arranged in the KITCHEN or plating up area of the dishes of the orders (16).

5. System according to claim 3, **characterised in that** the detection (4) and/or tracking (5) means of the identification devices (2) comprise RFID readers distributed around the restaurant and connected to the POS (1).

6. System according to claim 1, **characterised in that** the identification devices (2) attached to containers (R) for serving the orders incorporate a GPS device; the application registering both the route followed by the containers (R) and the time elapsed since the order (16) is received in the kitchen until it is delivered at the corresponding table (M).
